# EUROPEAN PATENT APPLICATION

(11) **EP 4 603 893 A1**
(43) Date of publication of application: **20.08.2025**
(21) Application number: 25153519.1
(22) Date of filing: 23.01.2025
(51) Int. Cl.: G02B 27/09, F41G 3/14, F41G 5/08, F41H 13/00, G01S 17/66

(54) **BEAM DIVERGENCE CONTROL WITHOUT CREATION OF BORESIGHT OR OTHER ERRORS**

(30) Priority: 29.01.2024 US 202418425933
(71) Applicant: Raytheon Company, Tewksbury, MA 01876 (US)
(72) Inventor: AVILA, Marco A., McKinney (US)
(74) Representative: Dentons UK and Middle East LLP

(57) **Abstract**

A system includes an optical source configured to generate an input optical beam. The system also includes a half waveplate configured to alter a polarization of the input optical beam. The system further includes multiple lenses configured to reshape the input optical beam and generate an output optical beam, where at least one of the lenses includes one or more birefringent materials. A divergence of the output optical beam is based on the half waveplate and the at least one of the lenses including the one or more birefringent materials. In addition, the system includes an actuator configured to rotate or reposition the half waveplate in order to adjust the divergence of the output optical beam.

## Description

### TECHNICAL FIELD

This disclosure is generally directed to optical systems. More specifically, this disclosure is directed to beam divergence control without the creation of boresight or other errors.

### BACKGROUND

Various optical systems have been developed over the years that use short-wave infrared (SWIR) beams, near infrared (NIR), or other optical beams to perform one or more functions. For example, surveillance and target tracking systems can use short-wave infrared beams or near infrared beams to monitor or track targets on the ground, in the air, on the water, or in space. As another example, target illumination laser (TIL) systems are typically used with telescopes that help improve their accuracy when identifying target trajectories. TIL systems can help high-energy laser (HEL) systems direct HEL beams at incoming missiles, rockets, mortars, or other targets to damage or destroy the targets effectively.

### SUMMARY

This disclosure relates to beam divergence control without the creation of boresight or other errors.

In a first embodiment, an apparatus includes a half waveplate configured to alter a polarization of an input optical beam. The apparatus also includes multiple lenses configured to reshape the input optical beam and generate an output optical beam, where at least one of the lenses includes one or more birefringent materials. A divergence of the output optical beam is based on the half waveplate and the at least one of the lenses including the one or more birefringent materials. The half waveplate is configured to be rotated or repositioned in order to adjust the divergence of the output optical beam.

In a second embodiment, a system includes an optical source configured to generate an input optical beam. The system also includes a half waveplate configured to alter a polarization of the input optical beam. The system further includes multiple lenses configured to reshape the input optical beam and generate an output optical beam, where at least one of the lenses includes one or more birefringent materials. A divergence of the output optical beam is based on the half waveplate and the at least one of the lenses including the one or more birefringent materials. In addition, the system includes an actuator configured to rotate or reposition the half waveplate in order to adjust the divergence of the output optical beam.

In a third embodiment, a method includes altering a polarization of an input optical beam using a half waveplate. The method also includes reshaping the input optical beam using multiple lenses to generate an output optical beam, where at least one of the lenses includes one or more birefringent materials. A divergence of the output optical beam is based on the half waveplate and the at least one of the lenses including the one or more birefringent materials. The half waveplate is configured to be rotated or repositioned in order to adjust the divergence of the output optical beam.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example system supporting beam divergence control without the creation of boresight or other errors according to this disclosure;
FIGURES 2 and 3 illustrate example architectures supporting beam divergence control without the creation of boresight or other errors according to this disclosure; and
FIGURE 4 illustrates an example method for beam divergence control without the creation of boresight or other errors according to this disclosure.

### DETAILED DESCRIPTION

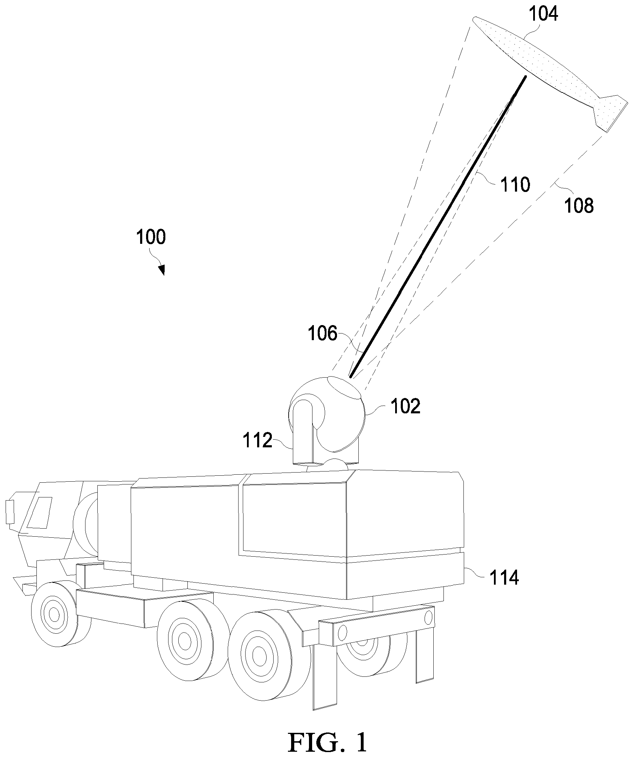

FIGURES 1 through 4, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

For simplicity and clarity, some features and components are not explicitly shown in every figure, including those illustrated in connection with other figures. It will be understood that any features illustrated in the figures may be employed in any of the embodiments described. Omission of a feature or component from a particular figure is for purposes of simplicity and clarity and is not meant to imply that the feature or component cannot be employed in the embodiments described in connection with that figure.

As noted above, various optical systems have been developed over the years that use short-wave infrared (SWIR) beams, near infrared (NIR), or other optical beams to perform one or more functions. For example, surveillance and target tracking systems can use short-wave infrared beams or near infrared beams to monitor or track targets on the ground, in the air, on the water, or in space. As another example, target illumination laser (TIL) systems are typically used with telescopes that help improve their accuracy when identifying target trajectories. TIL systems can help high-energy laser (HEL) systems direct HEL beams at incoming missiles, rockets, mortars, or other targets to damage or destroy the targets effectively.

Often times, these or other optical systems need to control the divergence of optical beams in order to support effective use of the optical beams. In some approaches, an optical beam passes through multiple lenses, where (i) the lenses are used to reshape and control the optical beam and (ii) divergence control is achieved by varying the distance between the lenses. However, while varying the distance between the lenses can change the divergence of the optical beam, it can have undesired side-effects. For example, varying the distance between the lenses can create undesirable line-of-sight (LOS) or boresight errors, meaning the optical beam may be directed in a different direction than desired. As another example, varying the distance between the lenses can create wavefront errors in the optical beam, such as due to the introduction of optical aberrations like spherical, coma, and astigmatism aberrations.

This disclosure provides various techniques for beam divergence control without the creation of boresight or other errors. As described in more detail below, an optical beam can pass through multiple lenses, and at least one of the lenses can be formed using at least one optical birefringent material. An optical birefringent material refers to a material that has a varying refractive index, where the refractive index varies based on at least the polarization of light passing through the material. Prior to passing through at least one of the lenses, the optical beam can pass through at least one waveplate used for polarization control. For example, if the optical beam has a linear polarization, the optical beam may pass through a half waveplate. If the optical beam has a circular polarization, the optical beam may pass through a quarter waveplate (which converts the circular polarization into a linear polarization) and a half waveplate. The half waveplate is used in combination with the optical birefringent material(s) forming at least one of the lenses to provide divergence control for the optical beam. For instance, in some embodiments, the half waveplate can be rotated in order to vary the divergence of the optical beam. In other embodiments, the half waveplate can be moved into and out of the path of the optical beam in order to vary the divergence of the optical beam. In either case, the rotation or insertion/removal of the half waveplate can be used to control the divergence of the optical beam based on the double refraction of the optical beam due to the birefringence properties of the combination of the half waveplate and the lens(es) formed using the birefringent material(s) (or the lack of such double refraction).

In this way, the techniques described in this patent document can be used to control the divergence of an optical beam without creating boresight errors, wavefront errors, or other errors in the optical beam. Among other reasons, this is because the half waveplate can be (i) rotated without changing the position of the half waveplate or (ii) switched into and out of the path of the optical beam. As a result, no variations may be needed to the distance between the lenses, which can eliminate a potential source of boresight errors, wavefront errors, or other errors in the optical beam. Moreover, the techniques described in this patent document can be used to support continuous divergence control or fixed divergence control (such as in steps) of an optical beam depending on the implementation.

Note that the described techniques for divergence control may be used in any suitable manner and in any suitable application. In the following discussion, it is often assumed that the described techniques for divergence control can be used with at least one optical beam in an HEL system that generates at least one high-energy laser beam. However, the described techniques for divergence control may be used in other systems and for other purposes, such as surveillance or target tracking. In general, this disclosure is not limited to use in any specific type(s) of system(s) or with any specific type(s) of optical beam(s).

FIGURE 1 illustrates an example system 100 supporting beam divergence control without the creation of boresight or other errors according to this disclosure. As shown in FIGURE 1, the system 100 includes a high-energy laser system 102 that is being used to engage a target 104. The target 104 in this example represents a rocket or missile. However, the high-energy laser system 102 may be used with any other suitable targets, such as one or more targets on the ground, in the air, on the water, or in space. Also, the functionality for beam divergence control described below may be used with any other suitable system for aiming or targeting purposes or other purposes.

The laser system 102 in this example generates an HEL beam 106, a target illumination laser (TIL) beam 108, and optionally a beacon illumination laser (BIL) beam 110. The HEL beam 106 represents a beam of laser energy that typically has a high power or energy level, such as at least about 10 kilo-Watts (kW) of power. Often times, the HEL beam 106 is ideally focused to as small an area as possible on the target 104, which is done in order to achieve the maximum possible effect on the target 104.

The TIL beam 108 represents a beam of laser energy that spreads out to illuminate part or all of the target 104. The TIL beam 108 typically has a much lower power or energy level compared to the HEL beam 106. Reflections of the TIL beam 108 off the target 104 can be received at the laser system 102 and used to capture images of the target 104. The images may be processed to perform super-resolution, automatic target aimpoint recognition, target tracking, or other functions. The images can also be processed to measure, for instance, the distance and angle of the target 104 relative to the laser system 102 or relative to a high-energy laser in the laser system 102. In some embodiments, the TIL beam 108 may represent a continuous wave 1567 nanometer (nm) laser beam, although other suitable longer or shorter wavelengths may be used for the TIL beam 108.

The BIL beam 110 represents a beam of laser energy that may be used to generate a more focused illumination spot or "see spot" on the target 104. In some cases, a particular intended location on the target 104 to be illuminated by the BIL beam 110 may be selected. For example, it may be predetermined to illuminate a particular feature on the nose of the target 104. The BIL beam 110 can be subject to optical turbulence in the atmosphere or other effects that create boresight error for the BIL beam 110. Thus, the actual location of the see spot on the target 104 may vary from the intended or expected location of the see spot, and the difference between the actual and intended/expected locations of the see spot can be used to determine the boresight error. Movement of the BIL beam 110 on the target 104 may be used as a proxy for movement of the HEL beam 106 on the target 104, so adjustments can be made to the HEL beam 106 and the BIL beam 110 to reduce or minimize the movement of the HEL beam 106 and the BIL beam 110 on the target 104. In some embodiments, the BIL beam 110 may represent a 1005 nm laser beam, although other suitable longer or shorter wavelengths may be used for the BIL beam 110. In some cases, the wavelength of the BIL beam 110 can be close to the wavelength of the HEL beam 106.

The BIL beam 110 can be offset (such as in angle) relative to the HEL beam 106 so that the BIL beam 110 and the HEL beam 106 strike the target 104 at different locations. However, both beams 106 and 110 travel from the laser system 102 to the target 104 in very close proximity to one another, and the actual distance between the strike points for the two beams 106 and 110 can be very small. Because of this, compensating for the boresight error associated with the BIL beam 110 may also correct for the same boresight error associated with the HEL beam 106. If the wavelength of the BIL beam 110 is close to the wavelength of the HEL beam 106, the two beams 106 and 110 can experience approximately the same boresight error.

In this particular example, the laser system 102 includes or is used with a multi-axis gimbal 112, which mounts the laser system 102 on a vehicle 114. The multi-axis gimbal 112 includes any suitable structure configured to point the laser system 102 in a desired direction. In some embodiments, the multi-axis gimbal 112 can rotate the laser system 102 about a vertical axis for azimuth control and about a horizontal axis for elevation control. However, any other suitable mechanisms for pointing the laser system 102 (such as about a single axis or multiple axes) may be used here. Also, in this particular example, the vehicle 114 on which the laser system 102 is mounted represents an armored land vehicle. However, the laser system 102 may be used with any other suitable type of vehicle (such as any other suitable land, air, water, or space vehicle), or the laser system 102 may be mounted to a fixed structure (such as a building).

As described in more detail below, the laser system 102 may include one or more systems supporting beam divergence control without the creation of boresight or other errors. Note that while boresight errors or other errors may still exist in or with a system due to other factors (such as optical turbulence in the atmosphere), the beam divergence control itself does not create boresight or other errors. In some cases, beam divergence control may be used with the HEL beam 106 or the TIL beam 108, such as to help control the divergence of the HEL beam 106 or the TIL beam 108 at or on the target 104.

To provide beam divergence control, the laser system 102 includes multiple lenses, such as a negative (diverging) lens and a positive (converging) lens, that can modify the HEL beam 106, the TIL beam 108, or other optical beam. At least one of the lenses is formed using at least one optical birefringent material. Any suitable optical birefringent material(s) may be used here, such as quartz, titanium dioxide (TiO₂), yttrium orthovanadate (YVO₄), calcite (CaCO₃), lithium niobate (LiNBO₃), magnesium fluoride (MgF₂), or silicon dioxide (SIO₂). These or other birefringent materials can have good opto-mechanical and thermal properties, making them useful in the optical design of a refractive optical beam expander. The laser system 102 also includes at least one waveplate used for polarization control, such as a half waveplate and optionally a quarter waveplate. The half waveplate can be rotated or inserted into/removed from the optical path of the HEL beam 106, the TIL beam 108, or other optical beam in order to provide control over the divergence of the HEL beam 106, the TIL beam 108, or other optical beam. Among other things, this approach helps to avoid the creation of boresight errors, wavefront errors, or other errors in the HEL beam 106, the TIL beam 108, or other optical beam while providing beam divergence control.

Although FIGURE 1 illustrates one example of a system 100 supporting beam divergence control without the creation of boresight or other errors, various changes may be made to FIGURE 1. For example, the laser system 102 may be used in any other suitable environment and for any other suitable purpose. Also, while shown here as being used to damage or destroy a moving hostile target 104, the laser system 102 can be used in any number of other ways depending on the application. Further, as noted above, beam divergence control may be used in other systems that may or may not involve the use of a high-energy laser system 102 or an HEL beam 106, a TIL beam 108, and/or a BIL beam 110.

There are various defense-related and commercial or other non-defense-related applications for high-energy laser systems or other systems that may benefit from the approaches described in this patent document. For instance, in commercial mining applications like drilling, mining, or coring operations, a high-energy laser can be used to soften or weaken an earth bed prior to drilling, which may allow for fewer drill bit changes and extended lifetimes and reliabilities of drill bits. In remote laser welding, cutting, drilling, or heat treating operations like industrial or other automation settings, a high-energy laser can be used to allow for the processing of thicker materials at larger working distances from the laser system while minimizing the heat-affected zone and maintaining vertical or other cut lines. This helps to support welding or cutting operations where proximity to the weld or cut site is difficult or hazardous and helps to protect the laser system and possibly any human operators from smoke, debris, or other harmful materials. In construction and demolition operations like metal resurfacing or deslagging, paint removal, and industrial demolition operations, a high-energy laser can be used to ablate material much faster and safer compared to conventional operations. As a particular example of this functionality, a high-energy laser can be used to support demolition of nuclear reactors or other hazardous structures, such as by cutting through contaminated structures like contaminated concrete or nuclear containment vessels or reactors from long distances. This avoids the use of water jet cutting or other techniques (which creates contaminated water or other hazardous waste) and provides improved safety (since human operators can remain farther away from contaminated structures being demolished). A number of additional applications are possible, such as with a high-energy laser in power beaming applications (where a beam is targeted to photovoltaic cells of remote devices to be recharged) or hazardous material applications (where a beam is used to heat and decompose hazardous materials into less harmful or non-harmful materials).

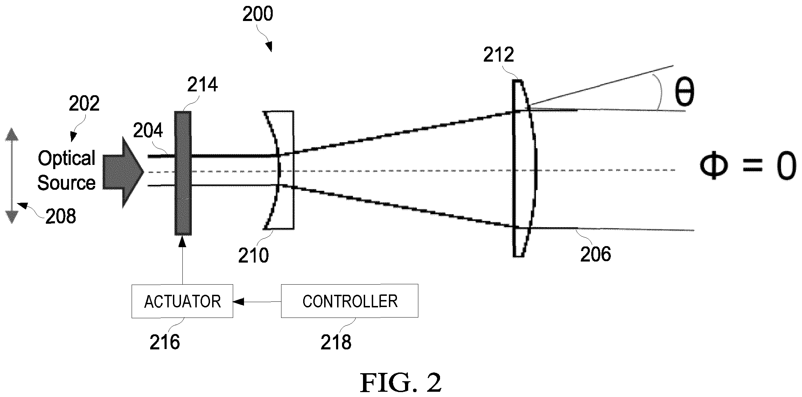

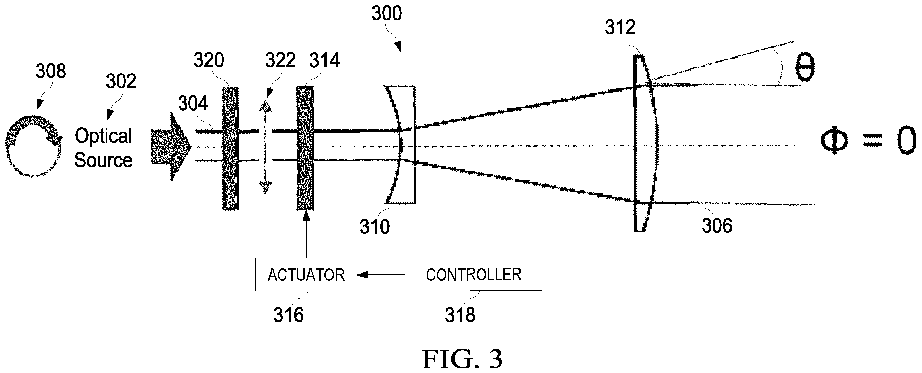

FIGURES 2 and 3 illustrate example architectures 200 and 300 supporting beam divergence control without the creation of boresight or other errors according to this disclosure. For ease of explanation, each of the architectures 200 and 300 may be described as being used in the system 100 of FIGURE 1, such as to support beam divergence control of the HEL beam 106 or the TIL beam 108. However, each of the architectures 200 and 300 may be used in any other suitable environment and for any other suitable purpose.

As shown in FIGURE 2, the architecture 200 includes an optical source 202 that is used to generate an input optical beam 204, and the architecture 200 modifies the input optical beam 204 in order to generate an output optical beam 206. The optical source 202 represents any suitable structure configured to generate an optical beam, such as a continuous wave or pulsed laser source. The input optical beam 204 and the output optical beam 206 may each have any suitable power or energy level. The input optical beam 204 may have any suitable size and dimensions, and optical energy in the input optical beam 204 may have any suitable distribution. As a particular example, the input optical beam 204 may represent a generally-circular optical beam having a diameter of about six millimeters and a Gaussian energy distribution. Similarly, the output optical beam 206 may have any suitable size and dimensions, and optical energy in the output optical beam 206 may have any suitable distribution. As a particular example, the output optical beam 206 may represent a generally-circular optical beam having a diameter of about fifteen millimeters and a Gaussian energy distribution. Note, however, that these sizes, shapes, and energy distributions are examples only and can vary as needed or desired. In this example, a polarization indicator 208 indicates that the input optical beam 204 has a linear polarization.

To modify the input optical beam 204, the architecture 200 includes multiple lenses 210 and 212. The lens 210 represents a negative or diverging lens, which causes optical energy of the input optical beam 204 to diverge. The lens 212 represents a positive or converging lens, which causes optical energy of the input optical beam 204 to converge. Using the negative and positive lenses 210 and 212 in combination, the architecture 200 resizes the input optical beam 204 in order to generate the output optical beam 206 having a different size.

Each of the lenses 210 and 212 can have any suitable size, shape, and dimensions. For example, the sizes and dimensions of the lenses 210 and 212 can vary based on the sizes of the input and output optical beams 204 and 206. Also, the shape of each lens 210 and 212 can vary based on the desired power of the lens. Each of the lenses 210 and 212 can also be formed using any suitable material(s). At least one of the lenses 210 and 212 is formed using one or more birefringent materials. Examples of birefringent materials that may be used can include quartz, titanium dioxide (TiO₂), yttrium orthovanadate (YVO₄), calcite (CaCO₃), lithium niobate (LiNBO₃), magnesium fluoride (MgF₂), or silicon dioxide (SIO₂).

A half waveplate 214 is used to adjust the polarization of the input optical beam 204 prior to reaching the lens(es) 210, 212 formed using the birefringent material(s). For example, the half waveplate 214 can represent a plate or other planar structure formed using at least one birefringent material, such as any of the birefringent materials discussed above. In some embodiments, the half waveplate 214 can be rotated in order to control how much the polarization of the input optical beam 204 is rotated when passing through the half waveplate 214. For instance, rotating the half waveplate 214 by a specified angle can cause the polarization of light passing through the half waveplate 214 to be rotated by twice the specified angle. This may allow for continuous control the divergence of the output optical beam 206, meaning any number of possible divergence angles *θ* can be obtained. In other embodiments, the half waveplate 214 can be switched into and out of the path of the input optical beam 204, where the half waveplate 214 (when inserted into the path of the input optical beam 204) can alter the polarization of light passing through the half waveplate 214. This may allow for fixed control the divergence of the output optical beam 206, meaning there may only be a fixed number of possible divergence angles *θ* that can be obtained.

By combining the half waveplate 214 with the lens(es) 210 and/or 212 formed using birefringent material(s), it is possible to control the divergence of the output optical beam 206. For example, in some embodiments, the half waveplate 214 can be rotated in order to rotate the polarization of the input optical beam 204, and different rotations in the polarization of the input optical beam 204 can result in different divergence angles *θ* of the output optical beam 206. In other embodiments, the half waveplate 214 can be switched into the path of the input optical beam 204 in order to obtain a specified divergence angle *θ* of the output optical beam 206 and switched out of the path of the input optical beam 204 in order to obtain a zero divergence angle (*θ* = 0) or to achieve some other nominal divergence angle. In both cases, the half waveplate 214 (either through its rotation or its presence/absence) alters the polarization angle of the input optical beam 204. The resulting optical beam passes through the lenses 210 and 212, at least one of which is formed using one or more birefringent materials. The birefringent material(s) of the lens(es) 210 and 212 can have a refractive index that varies based on at least the polarization of the light passing through the material. Thus, this provides for divergence control of the output optical beam 206 without needing to physically move either lens 210 or 212 or physically change the distance between the lenses 210 and 212.

In this example, an actuator 216 can be used to control the rotation or position of the half waveplate 214, and a controller 218 can be used to control the operation of the actuator 216. In some embodiments, the actuator 216 can cause the half waveplate 214 to rotate. In other embodiments, the actuator 216 can cause the half waveplate 214 to physically move into and out of the path of the input optical beam 204. The actuator 216 includes any suitable structure configured to rotate or move the half waveplate 214, such as a motor. The controller 218 can operate to control how the actuator 216 rotates or moves the half waveplate 214, such as based on a desired amount of divergence or a setting associated with a desired amount of divergence (which may be obtained from a user, via an algorithm, or in any other suitable manner). Based on at least one suitable input or in any other suitable manner, the controller 218 can output one or more control signals to the actuator 216 in order to control the amount of rotation of the half waveplate 214 or to control the switching of the half waveplate 214 into/out of the path of the input optical beam 204. The controller 218 includes any suitable structure configured to control the operation of the actuator 216, such as at least one microprocessor, microcontroller, digital signal processor (DSP), application-specific integrated circuit (ASIC), field programmable gate array (FPGA), or discrete circuitry.

As shown in FIGURE 3, the architecture 300 includes various components that may be the same as or similar to corresponding components in the architecture 200. For brevity, the discussion above of the components in the architecture 200 applies equally to the corresponding components in the architecture 300 and will not be repeated here. In this example, the architecture 300 includes an optical source 302 that is used to generate an input optical beam 304, and the architecture 300 modifies the input optical beam 304 in order to generate an output optical beam 306. A polarization indicator 308 indicates that the input optical beam 304 has a circular polarization (rather than a linear polarization). The input optical beam 304 passes through a quarter waveplate 320, which converts the circular polarization of the input optical beam 304 into a linear polarization as identified by a polarization indicator 322. The quarter waveplate 320 can represent a plate or other planar structure formed using at least one birefringent material, such as any of the birefringent materials discussed above.

From that point, the architecture 300 is structured in the same or similar manner as the architecture 200. The input optical beam 304 as converted to have a linear polarization is passed through a half waveplate 314, which can be rotated or moved into and out of the path of the input optical beam 304. Lenses 310 and 312 are used to modify the input optical beam 304 as output from the half waveplate 314, and at least one of the lenses 310 and 312 can be formed using at least one optical birefringent material, such as any of the birefringent materials discussed above. An actuator 316 can be used to control the rotation or position of the half waveplate 314, and a controller 318 can be used to control the operation of the actuator 316. The birefringent material(s) of the lens(es) 310 and 312 can have a refractive index that varies based on at least the polarization of the light passing through the material. Thus, this provides for divergence control of the output optical beam 306 without needing to physically move either lens 310 or 312 or physically change the distance between the lenses 310 and 312.

In both FIGURE 2 and FIGURE 3, the architectures 200 and 300 allow for beam divergence to be varied without introducing line-of-sight errors (meaning *Φ* = 0 boresight error) or wavefront errors. This is achieved because the divergence control is provided using the half waveplate 214 or 314 and the lens(es) 210/212 or 310/312 formed using the birefringent material(s), rather than by altering the spacing between the lenses 210 and 212 or 310 and 312.

Although FIGURES 2 and 3 illustrate examples of architectures 200 and 300 supporting beam divergence control without the creation of boresight or other errors, various changes may be made to FIGURES 2 and 3. For example, components can be added, omitted, combined, further subdivided, replicated, or placed in any other suitable configuration in each of FIGURES 2 and 3 according to particular needs. As a specific example, the components in both of the architectures 200 and 300 are shown as being positioned collinearly, meaning the input optical beams 204 and 304 generally follow straight paths through the architectures 200 and 300. However, mirrors or other optical devices may be used to redirect optical beams as needed or desired, such as to obtain a more compact package for each of the architectures 200 and 300.

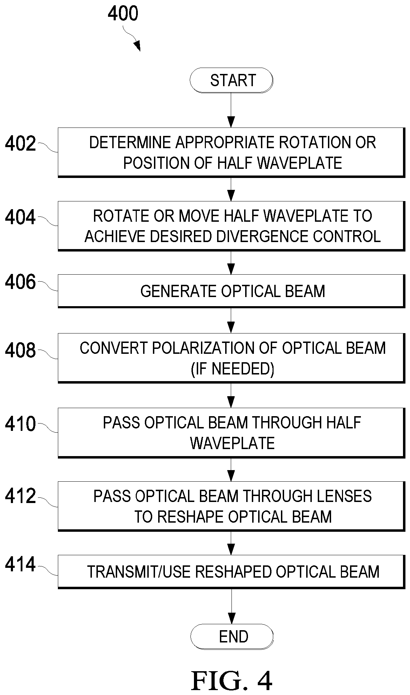

FIGURE 4 illustrates an example method 400 for beam divergence control without the creation of boresight or other errors according to this disclosure. For ease of explanation, the method 400 shown in FIGURE 4 may be described as involving the use of the architecture 200 or 300 of FIGURE 2 or 3 in the system 100 of FIGURE 1. However, the method 400 may be used with any other suitable architecture and with any other suitable system, which can be used in any suitable environment and for any suitable purpose.

As shown in FIGURE 4, an appropriate rotation or position of a half waveplate is determined at step 402. This may include, for example, the controller 218 or 318 determining the amount of divergence to be obtained in an output optical beam 206 or 306 (such as based on user input or in any other suitable manner). This may also include the controller 218 or 318 determining an amount of rotation needed for the determined amount of divergence or determining whether the half waveplate 214 or 314 is even needed to obtain the determined amount of divergence (meaning whether the half waveplate 214 or 314 should be repositioned in or out of the path of an input optical beam 204 or 304). The half waveplate is rotated or positioned to achieve desired divergence control based on the determination at step 404. This may include, for example, the controller 218 or 318 controlling the actuator 216 or 316 in order to rotate or reposition the half waveplate 214 or 314.

An optical beam is generated at step 406. This may include, for example, the optical source 202 or 302 generating an input optical beam 204 or 304. A polarization of the optical beam may optionally be converted at step 408. This may include, for example, the quarter waveplate 320 converting the circular polarization of the input optical beam 304 into a linear polarization. The optical beam passes through the half waveplate at step 410. This may include, for example, the input optical beam 204 or 304 passing through the half waveplate 214 or 314, which has been rotated or positioned as noted above. The optical beam passes through multiple lenses to reshape the optical beam at step 412. This may include, for example, the input optical beam 204 or 304 passing through the lenses 210 and 212 or 310 and 312. At least one of the lenses is formed using one or more optical birefringent materials, which (in conjunction with the half waveplate 214 or 314) allows for divergence control of the reshaped optical beam. The reshaped optical beam is transmitted or used in some manner at step 414. This may include, for example, the architecture 200 or 300 outputting the reshaped optical beam as an output optical beam 206 or 306. In some cases, the output optical beam 206 or 306 may be used as the HEL beam 106 or the TIL beam 108 in the system 100.

Although FIGURE 4 illustrates one example of a method 400 for beam divergence control without the creation of boresight or other errors, various changes may be made to FIGURE 4. For example, while shown as a series of steps, various steps in FIGURE 4 can overlap, occur in parallel, occur in a different order, or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

Aspects of the disclosure may be as set out in the following numbered clauses:
Clause 1. An apparatus comprising:
   a half waveplate configured to alter a polarization of an input optical beam; and
   multiple lenses configured to reshape the input optical beam and generate an output optical beam, wherein at least one of the lenses comprises one or more birefringent materials;
   wherein a divergence of the output optical beam is based on the half waveplate and the at least one of the lenses comprising the one or more birefringent materials; and
   wherein the half waveplate is configured to be rotated or repositioned in order to adjust the divergence of the output optical beam.
Clause 2. The apparatus of Clause 1, further comprising:
   an actuator configured to rotate the half waveplate so that the half waveplate obtains a desired rotation and provides a desired adjustment to the polarization of the input optical beam.
Clause 3. The apparatus of Clause 1, further comprising:
   an actuator configured to move the half waveplate into and out of a path of the input optical beam.
Clause 4. The apparatus of Clause 1, wherein the multiple lenses comprise a negative lens and a positive lens.
Clause 5. The apparatus of Clause 4, wherein the negative lens comprises the one or more birefringent materials.
Clause 6. The apparatus of Clause 1, further comprising:
   a quarter waveplate configured to convert a circular polarization of the input optical beam into a linear polarization before the half waveplate alters the polarization of the input optical beam.
Clause 7. The apparatus of Clause 1, wherein the one or more birefringent materials comprise at least one of: quartz, titanium dioxide (TiO₂), yttrium orthovanadate (YVO₄), calcite (CaCO₃), lithium niobate (LiNBO₃), magnesium fluoride (MgF₂), or silicon dioxide (SIO₂).
Clause 8. A system comprising:
   an optical source configured to generate an input optical beam;
   a half waveplate configured to alter a polarization of the input optical beam;
   multiple lenses configured to reshape the input optical beam and generate an output optical beam, wherein at least one of the lenses comprises one or more birefringent materials, and wherein a divergence of the output optical beam is based on the half waveplate and the at least one of the lenses comprising the one or more birefringent materials; and
   an actuator configured to rotate or reposition the half waveplate in order to adjust the divergence of the output optical beam.
Clause 9. The system of Clause 8, further comprising:
   a controller configured to control the actuator based on a desired divergence of the output optical beam.
Clause 10. The system of Clause 8, wherein the actuator is configured to rotate the half waveplate so that the half waveplate obtains a desired rotation and provides a desired adjustment to the polarization of the input optical beam.
Clause 11. The system of Clause 8, wherein the actuator is configured to move the half waveplate into and out of a path of the input optical beam.
Clause 12. The system of Clause 8, wherein the multiple lenses comprise a negative lens and a positive lens.
Clause 13. The system of Clause 12, wherein the negative lens comprises the one or more birefringent materials.
Clause 14. The system of Clause 8, further comprising:
   a quarter waveplate configured to convert a circular polarization of the input optical beam into a linear polarization before the half waveplate alters the polarization of the input optical beam.
Clause 15. The system of Clause 8, wherein the one or more birefringent materials comprise at least one of: quartz, titanium dioxide (TiO₂), yttrium orthovanadate (YVO₄), calcite (CaCO₃), lithium niobate (LiNBO₃), magnesium fluoride (MgF₂), or silicon dioxide (SIO₂).
Clause 16. The system of Clause 8, wherein the output optical beam comprises a high-energy laser (HEL) beam or a target illumination laser (TIL) beam.
Clause 17. A method comprising:
   altering a polarization of an input optical beam using a half waveplate; and
   reshaping the input optical beam using multiple lenses to generate an output optical beam, wherein at least one of the lenses comprises one or more birefringent materials;
   wherein a divergence of the output optical beam is based on the half waveplate and the at least one of the lenses comprising the one or more birefringent materials; and
   wherein the half waveplate is configured to be rotated or repositioned in order to adjust the divergence of the output optical beam.
Clause 18. The method of Clause 17, further comprising:
   rotating the half waveplate to adjust the divergence of the output optical beam.
Clause 19. The method of Clause 17, further comprising:
   repositioning the half waveplate to adjust the divergence of the output optical beam.
Clause 20. The method of Clause 17, further comprising:
   converting a circular polarization of the input optical beam into a linear polarization using a quarter waveplate before the half waveplate alters the polarization of the input optical beam.

## Claims

1. An apparatus comprising:
a half waveplate configured to alter a polarization of an input optical beam; and
multiple lenses configured to reshape the input optical beam and generate an output optical beam, wherein at least one of the lenses comprises one or more birefringent materials;
wherein a divergence of the output optical beam is based on the half waveplate and the at least one of the lenses comprising the one or more birefringent materials; and
wherein the half waveplate is configured to be rotated or repositioned in order to adjust the divergence of the output optical beam.

2. The apparatus of Claim 1, further comprising:
an actuator configured to rotate the half waveplate so that the half waveplate obtains a desired rotation and provides a desired adjustment to the polarization of the input optical beam.

3. The apparatus of Claim 1 or claim 2, further comprising:
an actuator configured to move the half waveplate into and out of a path of the input optical beam.

4. The apparatus of any preceding Claim, wherein the multiple lenses comprise a negative lens and a positive lens; and
preferably, wherein the negative lens comprises the one or more birefringent materials.

5. The apparatus of any preceding Claim, further comprising:
a quarter waveplate configured to convert a circular polarization of the input optical beam into a linear polarization before the half waveplate alters the polarization of the input optical beam.

6. The apparatus of any preceding Claim, wherein the one or more birefringent materials comprise at least one of: quartz, titanium dioxide (TiO₂), yttrium orthovanadate (YVO₄), calcite (CaCO₃), lithium niobate (LiNBO₃), magnesium fluoride (MgF₂), or silicon dioxide (SIO₂).

7. A system comprising:
an optical source configured to generate an input optical beam;
a half waveplate configured to alter a polarization of the input optical beam;
multiple lenses configured to reshape the input optical beam and generate an output optical beam, wherein at least one of the lenses comprises one or more birefringent materials, and wherein a divergence of the output optical beam is based on the half waveplate and the at least one of the lenses comprising the one or more birefringent materials; and
an actuator configured to rotate or reposition the half waveplate in order to adjust the divergence of the output optical beam.

8. The system of Claim 7, further comprising:
a controller configured to control the actuator based on a desired divergence of the output optical beam.

9. The system of Claim 7 or Claim 8, wherein the actuator is configured to rotate the half waveplate so that the half waveplate obtains a desired rotation and provides a desired adjustment to the polarization of the input optical beam; and/or.
wherein the actuator is configured to move the half waveplate into and out of a path of the input optical beam.

10. The system of Claim 7, wherein the multiple lenses comprise a negative lens and a positive lens; and
preferably, wherein the negative lens comprises the one or more birefringent materials.

11. The system of any one of Claims 7 to 10, further comprising:
a quarter waveplate configured to convert a circular polarization of the input optical beam into a linear polarization before the half waveplate alters the polarization of the input optical beam.

12. The system of any one of Claims 7 to 11, wherein the one or more birefringent materials comprise at least one of: quartz, titanium dioxide (TiO₂), yttrium orthovanadate (YVO₄), calcite (CaCO₃), lithium niobate (LiNBO₃), magnesium fluoride (MgF₂), or silicon dioxide (SIO₂); and/otr
wherein the output optical beam comprises a high-energy laser (HEL) beam or a target illumination laser (TIL) beam.

13. A method comprising:
altering a polarization of an input optical beam using a half waveplate; and
reshaping the input optical beam using multiple lenses to generate an output optical beam, wherein at least one of the lenses comprises one or more birefringent materials;
wherein a divergence of the output optical beam is based on the half waveplate and the at least one of the lenses comprising the one or more birefringent materials; and
wherein the half waveplate is configured to be rotated or repositioned in order to adjust the divergence of the output optical beam.

14. The method of Claim 13, further comprising:
rotating the half waveplate to adjust the divergence of the output optical beam.

15. The method of Claim 13 or Claim 14, further comprising:
repositioning the half waveplate to adjust the divergence of the output optical beam; and/or
converting a circular polarization of the input optical beam into a linear polarization using a quarter waveplate before the half waveplate alters the polarization of the input optical beam.
